# EUROPEAN PATENT APPLICATION

(11) **EP 4 749 401 A1**
(43) Date of publication of application: **27.05.2026**
(21) Application number: 24214166.1
(22) Date of filing: 20.11.2024
(51) Int. Cl.: G06F 3/01, G01B 11/22, G01S 7/481, G01S 7/487, G01S 17/894, G06V 10/25, G06V 10/46, G06V 40/19, H04N 23/61

(54) **SYSTEM AND METHOD FOR VISUAL AWARENESS**

(71) Applicant: VoxelSensors SRL, 1000 Brussels (BE)
(72) Inventor: Greenberg, Boris, 6579402 Tel Aviv Jaffa (IL); Van Der Tempel, Ward, 3140 Keerbergen (BE)

(57) **Abstract**

The present invention relates to a method for visual awareness. The method comprises the step of tracking an eye of a user for at least a first period of time, by determining at least one instantaneous angular position of the eye over said first period of time. The method further comprises the step of determining, based on said tracking, a first region of interest (2', 2") in said field of view (3). The method further comprises the step of constructing at least one physical saliency map at least in said first region of interest (2', 2"). The method further comprises the step of correlating said at least one angular position to said at least one physical saliency map.

## Description

### TECHNICAL FIELD

The present invention relates to a method and system for visual awareness.

### BACKGROUND

Capturing the world has become important for users over the past decade. There is a huge demand for cameras, which often come integrated with mobile phones. The problem is that users tend to capture the world too often, which results in looking at the world through lenses much more than doing so directly, and therefore resulting in a limited and poor perception experience.

A possible solution is integrating cameras in a wearable device (e.g. in a headset or glasses). However, even that would require heavy involvement of the user to capture the world accurately, require too much memory, and consume too much power.

There is a need therefore for an autonomous, memory efficient, and power efficient solution. The present invention aims to resolve at least in part the problems mentioned above.

### SUMMARY OF THE INVENTION

It is an object of embodiments of the present invention to overcome the limitations discussed above and obtain a an autonomous, memory efficient, and power efficient solution.

In a first aspect, the present invention relates to a method for visual awareness, comprising the steps of:
- tracking an eye of a user for at least a first period of time, by determining at least one instantaneous angular position of the eye over said first period of time,
- determining, based on said tracking, a first region of interest in said field of view (sometimes referred to as the scene),
- constructing at least one physical saliency map at least in said first region of interest, and
- correlating said at least one angular position to said at least one physical saliency map.

It is an advantage of embodiments of the present invention that a low latency, power efficient, and memory efficient visual awareness is obtained, since the constructed physical saliency map relates only to the region(s) of interest. It is an advantage of embodiments of the present invention that information of the region of interest of the user are determined based on the angular position of the eye and the physical saliency therein, are obtained automatically without the user's intervention. In other words, the user's contribution is passive and minimal (i.e. through the angular position of the eye), and not active (e.g. by pointing to the region of interest, or by framing the region of interest), therefore a fast operation is obtained, and a better real-world experience is obtained. It is an advantage of embodiments of the present invention that the region of interest is based on the parts of the field of view in which the user has interest. It is an advantage of embodiments of the present invention that the information (e.g. physical saliency) of other regions which are not of interest to the user are not captured, processed, or constructed, therefore reducing the power needed, increases the speed of operation, and reduces the needed memory. It is an advantage of embodiments of the present invention that a better experience is obtained, since the user is occupied by observing the field of view, instead of being occupied by capturing information of the field of view or pointing out the areas of interest in said field of view. It is an advantage of embodiments of the present invention that, instead (or in addition to) of capturing the field of view (i.e. reality), the method captures how the user observes reality, therefore visual awareness is obtained based specifically on the user's interests in the field of view. It is an advantage of embodiments of the present invention that the region(s) of interest is accurately and reliably obtained and reflects how the user perceived reality.

Preferred embodiments of the first aspect of the invention comprise one or a suitable combination of more than one of the following features.

The method preferably comprises the step of determining, based on the correlation, a second region of interest, wherein said second region of interest is smaller than said first region of interest. This is advantageous in allowing to understand, more precisely, what parts or details in the field of view the user is interested in.

The method preferably comprises the step of processing information of said at least first and/or second region of interest differently than information outside of said at least first and/or second region of interest, wherein said information comprises colors, and/or contrast, and/or shapes. This allows to save power due to only processing the relevant information. For example, only information in said first and/or second regions are processed, and information out of said regions are not processed. As another example, the density of information obtained in the region of interested are higher than that elsewhere.

The method preferably comprises the step of obtaining a depth map only in said first and/or second region of interest. This is advantageous in having a fast and power efficient method. In one embodiment, the physical saliency map is constructed based on the depth map in the region of interest.

The method preferably comprises the step of capturing information of said at least one region of interest (e.g. first and/or second region of interest). For example, capturing only information of said at least one region of interest).

The method preferably comprises the step of determining a pattern of behavior of said eye of said user, and the step of predicting based on said pattern of behavior of said eye an intended task of the user, and predicting based on said intended task said region of interest in current and/or future periods of time. It is an advantage of embodiments of the present invention that it is possible to predict the intention of the user based on said pattern of behavior.

The method preferably comprises the step of determining said region of interest based on the instantaneous angular position of the eye in an initial period of time, wherein said initial period of time is the first 20% of the first period of time, preferably 10%, more preferably 5%. It is an advantage of embodiments of the present invention that the region of interest is determined with greater accuracy.

The method preferably further comprising the step of constructing a 2D or 3D representation of said at least one region of interest based on said information. It is an advantage of embodiments of the present invention that the representation of the region of interest can be stored and viewed later by the user. It is an advantage of embodiments of the present invention that the user is only passively involved in obtaining the representation. It is an advantage of embodiments of the present invention that the representation is of a high quality (e.g. comprising more data of interest to the user, and less data of non-interest to the user, or alternatively more precision or quality or treatment for the data of interest to the user, and less precision or quality or treatment for the data of non-interest to the user).

The method preferably further comprising the step of utilizing artificial intelligence models to identify objects in said region of interest. It is an advantage of embodiments of the present invention that a quick identification of objects in the region of interest is obtained, with minimal and passive user involvement.

The region of interest is preferably smaller than one half of the field of view, preferably smaller than one third of the field of view, more preferably smaller than one quarter of the field of view. It is an advantage of embodiments of the present invention that the region of interest is specific to the user's interest, which allows quick operation, low power consumption, and requires low storage space.

The region of interest has an area, wherein the method preferably further comprises the step of determining said area based on said physical saliency map. It is an advantage of embodiments of the present invention that only the relevant information in the field of view is captured based on the user's interest, which is based on the instantaneous angular position of the eye.

A region of said field of view is preferably considered as the region of interest based on an eye-frequentation map (i.e. if said angular position of the eye corresponded thereto for a second period of time above a third predetermined period of time, within a fourth predetermined period of time). It is an advantage of embodiments of the present invention that the region of interest is determined with greater accuracy and reliability.

The at least one region of interest (e.g. first and second region of interest) is preferably a plurality of regions of interest, wherein each of said plurality of regions of interest corresponds (i.e. is correlated) to at least one physical saliency map. It is an advantage of embodiments of the present invention that different regions of interest can correspond (or correlate) to different saliency maps. In other words, the interest of the user in different regions of interest, each being based on different physical saliency modalities, can be determined. It is an advantage of embodiments of the present invention that efficient framing of the region(s) of interest and capturing of information thereof is obtained.

The method preferably further comprises the steps of ranking the plurality of regions of interest based on said eye-frequentation map. It is an advantage of embodiments of the present invention that information of multiple regions of interest are captured and stored, based on the interest of the user, but with passive and minimal contribution from the user.

The method preferably further comprises the steps of:
- projecting a first light beam onto the region of interest, thereby creating a first light spot on said field of view, by means of a first projector;
- scanning said first light beam along a trajectory, such as to scan at least partially said region of interest, by means of a scanner;
- detecting the reflected light from the region of interest by means of a first optical sensor,
- imaging said field of view onto a plurality of rows and columns of sensing units of said first optical sensor, by means of optics, wherein the first light spot in the field of view corresponds to a detection on said first optical sensor,
- obtaining depth information at said first light spot.

It is an advantage of embodiments of the present invention that 3D information of said field of view and said regions of interest are obtained.

The method preferably further comprises the steps of:
- projecting a second light beam onto a predetermined area of the cornea of the eye, thereby creating a second light spot on said field of view, by means of a second projector;
- detecting the reflected light from the eye by means of a second optical sensor, said reflected light comprises at least one, preferably two, specular reflection, said reflection is preferably at least a first Purkinje reflection, more preferably at least a first Purkinje reflection and a fourth Purkinje reflection;
- determining the location of detection on said second optical sensor, preferably wherein the second optical sensor comprises a plurality of sensing units forming a matrix of pixels, preferably each sensing unit comprising a photo detector, preferably each photo detector is a single photon avalanche detector;
- from the determined location of detection and/or the displacement thereof, calculating the orientation and/or position of said eye and/or the change thereof.

It is an advantage of embodiments of the present invention that the instantaneous angular position of the eye is determined with great accuracy.

In a second aspect, the present invention relates to a system for visual awareness, comprising:
- a first optical sensor (e.g. an eye tracker), adapted to track an eye of a user by determining at least one instantaneous angular position of the eye over at least a first period of time, and further adapted to determine a first region of interest in said field of view,
- a second optical sensor adapted to construct at least one physical saliency map at least in said region of interest,
a processor connected to said optical sensors, wherein said processor is adapted to correlate said at least one angular position to said at least one physical saliency map.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention.

### DESCRIPTION OF THE FIGURES

The disclosure will be further illustrated by means of the following description and the appended figures.
Figure 1 shows schematically an optical sensing system (10) monitoring an eye (1) as well as a scene (3) simultaneously, according to embodiments of the present invention.
Figure 2 shows schematically that the system (10) comprises a first optical sensor (7') and a second optical sensor (7"), according to embodiments of the present invention.

The drawings presented herein are illustrative for the present invention and are not to scale. Any reference signs in the claims shall not be construed as limiting the scope. In the different drawings, the same reference signs refer to the same or analogous elements.

### DETAILED DESCRIPTION

The present invention relates to a method and system for visual awareness.

In a first aspect, the present invention relates to a method for visual awareness. The method further comprises the step of tracking an eye of a user for at least a first period of time, by determining at least one instantaneous angular position of the eye over said first period of time. Based thereon, the method comprises the step of determining a first region of interest in said field of view. In many cases, there can be multiple instantaneous angular positions of the eye in said first period of time, being closely located to each other, thereby indicating the interest of the user in a part of the field of view. For example, a range of instantaneous angular positions of the eye is determined over a period of time, and thereafter matched or corresponded or correlated, as shown below, with at least one saliency map in said first region of interest. In other cases, these can also be located further from each other, thereby also indicating interest in multiple parts of said field of view.

The method comprises the step of constructing at least one physical saliency map of a field of view. For example, observing the field of view and constructing thereafter said map. For example, the physical saliency is based on one physical saliency modality, for example based on colors, contrast, shapes, dynamics, or generally parts of the scene which stand out and therefore expected to be observed by the user, or other modalities known in the art. Typically, the region of interest has a higher saliency level than other regions in the field. In some cases, there could also be multiple regions of interest with similar saliency levels. In this case, the saliency map is therefore determined without knowledge of the movement of the eye of the user. The physical saliency can be based on analytic saliency, contextual saliency, and/or dynamic saliency, as known in the art. For example, building different physical saliency maps based on different modalities, and deciding on which physical saliency map to use based on the angular position of the eye.

As an example, this method can be used to identify in a field of view the regions of interest of most interest to the user, based on an attention map derived from an eye-frequentation map (i.e. a map describing how much time the eye visited which part of the field of view). Using this information, the system may offer the user a set of images from the field of view, each appropriately framing the different regions of interest of interest to the user.

Alternatively, the system may offer the user at least one capture of the field of view emphasizing the at least one regions of interest with a bokeh effect or modified color palette. The problem that is resolved is that the system, by means of combining physical saliency and spatially registered eye behavior, can offer the user relevant information about the field of view.

The method further comprises the step of correlating said at least one angular position to said at least one saliency map. The field of view is sometimes referred to as the scene. In other words, the behavior of the eye of the user, which is known by the angular position of the eye at different times, is matched to the saliency map(s) in the region of interest. For example, if the user moves their eye to the right, the angular position of the eye moves to the right accordingly, which means the region of interest is possibly at the right side of the user, and the saliency map is found only for that region, accordingly to properly locate, frame, and confirm the region of interest.

The method may further comprises the step of processing information of said at least one region of interest. This is preferably done differently than information outside of said at least one region of interest (i.e. differently than other regions in the field of view). For example, applying certain filters or processing methods, for example zooming in or out from said at least one region of interest, or for example focusing on the region of interest and blurring the remaining of the scene around said region of interest. For example, capturing all the field of view, finding out the region of interest, and applying processing methods on the region of interest different than the rest of the field of view. As another example, saving on permanent memory, only the info related to the region of interest.

The method further comprises the step of repeating the above steps, for example for updating the region of interest. For example, if the region of interest changes, then the steps are repeated for another region of interest.

Although the field of view and scene are sometimes used interchangeably in the text, the scene may also refer to the full world (360 degrees), while the field of view is only what is seen by the eye (and the device retaining the information e.g. the camera). Therefore the field of view may change based on the user's orientation. As a result, the field of view may be refreshed after a predetermined time period. The invention therefore may be generalized to processing and/or capturing the region of interest in all the world (360 degrees rotation), and not only in the field of view at a certain time, with the preference that the processing and/or capturing is different for the region of interest in comparison to other regions.

Preferably, the method comprises the step of determining, based on the correlation, a second region of interest, wherein said second region of interest is smaller than said first region of interest. For example, the second region allows to understand, more precisely, what parts or details in the field of view the user is interested in.

Preferably, the method comprises the step of capturing information of said at least one region of interest (first and/or second region of interest) and/or said field of view. For example, capturing shapes, color, movement, or similar kind of information. For example, retaining information of the full scene or field of view, for example for the purpose of constructing the saliency map, then capturing information of said at least one region of interest only (or processing the information thereof differently than other regions). As can be understood, the region of interest is smaller than the full field of view, or in practice it is much smaller. for example, the full field of view is preferably not captured (the information are not stored), but only retained temporarily, and only the region of interest is captured and stored. This is advantageous in reducing power consumption and needed memory. Alternatively, the method comprises the step of capturing (e.g. storing and/or processing) information of said at least one region of interest only, without having to retain information of the full field of view. This is more advantageous in reducing the power consumption and needed memory. Alternatively, the full field of view is captured, and then the information of the region of interest is cropped out of the information of the full field of view, after which the full field of view may be discarded. Other options may be envisaged.

Preferably, the method comprises the step of obtaining a depth map only in said first and/or second region of interest. This is advantageous in having a fast and power efficient method. In one embodiment, the physical saliency map is constructed based on the depth map, but as shown above, it can also be constructed otherwise.

Preferably, the method comprises the step of framing the region of interest. For example, such that data of said region of interest are captured.

Preferably, the method comprises the step of predicting the intentions of the user and taking further actions based thereon. For example, if the user is looking at an object in a region of interest for a long time, then the intention may be to zoom in to the object. This can also be in combination with knowing the historic intentions of the user, which knowledge can be built over time.

Moreover, with the right eye-tracking system, more parameters about the eye behavior can be measured to determine the intention (smooth pursuit of the eye, fixation on certain elements, searching motion of eye, etc) of the user and even the cognitive state of the user (for example focus versus day-dreaming state) and take or propose the appropriate action for the system.

Preferably, the method comprises the step of determining a pattern of behavior of said eye of said user, and the step of predicting based on said pattern of behavior an intended task of the user, and predicting, based on said intended task, said region of interest in current (i.e. present) and future periods of time. For example, a pattern of behavior may correspond to a certain physical saliency modality, and by knowing said pattern, it is possible to determine which physical saliency modality matches best with the movement of the eye. This allows to predict the intention of the user based on said pattern of behavior. For example, the pattern of behavior of the eye may facilitate obtaining information on the user in terms of attention on an object in a scene. For example, if the eye is looking at a cup of coffee, then this is determined in a first period of time based on the angular position of the eye during said first period of time. Thereafter, the method predicts that the user may try to identify, at a subsequent period of time, the location of the coffee, sugar, or cutlery, and predicts the region of interest based on such analysis of pattern of eye behaviour. Generally put, the method comprises the step of predicting the intent of the user, and the course of action that the user will undertake to achieve said intent. Therefore, based on the intent and action to achieve said intent, the field of view and objects therein are looked at from different perspectives. In other words, the method contextualizes the field of view and objects therein, in light if the intent and action to achieve said intent. As a result, the method may assist the user in achieving said intent.

Preferably, the method further comprises the step of determining said region of interest based on the instantaneous angular position of the eye in an initial period of time, wherein said initial period of time is the first 20% of the first period of time, preferably 10%, more preferably 5%. This allows to determine the region of interest, and match it with the best saliency map, quickly, and with greater accuracy.

Preferably, the method further comprises the step of constructing a 2D or 3D representation of said at least one region of interest based on said information. A 2D representation is easily obtained using a camera. A 3D representation can be obtained by measuring the depth using e.g. triangulation, for example triangulation based on two cameras, or based on one camera and one illuminator, or using time of flight, or other methods for measuring depth. In other words, the perception of the field of view is in 2D or 3D. Such a representation may, but not necessarily, also comprise color data of the scene e.g. color of each 2D or 3D point.

Preferably, the method further comprises the step of utilizing an artificial intelligence model to identify objects in said region of interest. For example, capturing objects and consulting an artificial intelligence model or a scene understanding model or an object recognition model or a large language model, or other similar models known in the art for a similar purpose, to identify the object and inform the user of said object. Alternatively, a database can be consulted, with or without the help of such models, to identify objects in the field of view and inform the user thereof.

Preferably, said region of interest is smaller than one half of the field of view, preferably smaller than one third of the field of view, more preferably smaller than one quarter of the field of view. In practice, the user in most cases focuses on limited regions in the field of view, for example one, two, or three regions, which normally may be less than 20% or even 10% of the field of view. Alternatively, the user may be equally interested in multiple regions of the field of view, wherein said multiple regions make up a large part of the field of view.

Preferably, the region of interest has an area, wherein the method further comprises the step of determining said area based on said physical saliency map. For example, if the region of interest is rectangle, then the method comprises the step of determining the length and width of said rectangle. For example, after figuring out the object(s) of interest in the field of view, the length and width of said objects is approximated, after which a rectangle is formed around said object(s), wherein the dimensions of said rectangle are based on the length and width of said object(s), in addition to, for example, a predetermined margin. The information inside said rectangle are then captured and stored.

Preferably, the region of interest is determined based on the period of time that the user spent looking the region of interest. For example, if the angular position of the eye corresponded to a certain region in the scene or field of view for the longest time (e.g. compared to other regions), then this region becomes the region of interest. For example, if the period of time in which the angular position corresponded to a region is a second period of time, above a third predetermined period of time, within a fourth predetermined period of time, then this region becomes the region of interest. For example, if the angular position corresponded to a region is e.g. e.g. 2.2 seconds (second predetermined period of time), which is more than 2 seconds (third predetermined period of time), in a window of 3 seconds (fourth predetermined period of time), then the region is considered the region of interest. The second predetermined period of time is at most equal to the third predetermined period of time. For example, the 2.2 seconds (second predetermined period of time) do not have to be consecutive, but it is preferable that it is. For example, the gaze of the eye may leave the region of interest and come back to it. This allows that the region of interest is determined with greater accuracy and reliability.

Preferably, the at least one region of interest (e.g. first and second regions of interest) is a plurality of regions of interest. For example, two or three regions of interest that are close or away from each other, which the eye gaze is pointing at. Each of said plurality of regions of interest corresponds to at least one physical saliency map.

Preferably, the method further comprises the step of calculating the second period of time corresponding to each region of interest, and ranking the regions of interest based on said second period of time. For example, if the user spends 10 seconds out of 20 seconds on a first region, and 7 seconds out of 9 seconds on a second region, then the region of interests are ranked accordingly, and thereafter said region of interest are captured and stored in a memory element.

Preferably, the method further comprising the step of projecting (and scanning, see below) a first light beam onto the region of interest, thereby creating a first light spot on said field of view, by means of a first projector. In another embodiment the light is projected (and scanned, see below) onto the whole field of view. The light beam creates a first light spot on the region of interest. Said spot may for example be dot-shaped or a semi-dot or disk-shaped or a collection of dots or any other suitable shape. Knowing the shape of the light spot is advantageous for filtering purposes (e.g. neighborhood and/or persistence filtering).

Preferably, the method further comprises the step of scanning said first light beam along a trajectory, by means of a scanner. For example, the region of interest is at least partially scanned. Scanning is done in at least one dimension, preferably in two dimensions, for example two dimensions perpendicular on each other, for example a horizontal and vertical dimension. Scanning may be for example in a Lissajous pattern or a raster scan, or the like, for example a repetitive projection pattern. The scanning means may for example be a MEMS scanner or a mirror (e.g. rotatable), or an optical phase array, or meta surface approach beam scanning, or the like. For example, scanning between two extreme vertical lines (e.g. one on the extreme right, and one on the extreme left) defining the field of view in the horizontal direction, and two extreme horizontal lines (e.g. one on the extreme top, and one on the extreme bottom) defining the field of view in the vertical direction.

The light beam may be continuous or pulsed, and the present invention can work with either. It is however preferrable to use a pulsed light beam (e.g. a pulsed laser) since the power is concentrated in the pulse i.e. each pulse has a higher power while maintaining the same average power, thereby allowing easier detection and filtering. Also, using a pulsed light beam is advantageous when using persistence or neighborhood conditions (explained below) for better filtering, as it allows to check said conditions based on the pulse length, instead of based on observation windows as in the case of a continuous pulse, which is typically longer than the pulse length.

Preferably, the method further comprises the step of detecting the reflected light from the region of interest by means of the first optical sensor. For example, a measurement of the light spot positions by a sensing unit (3) of the optical sensor (2) at each time instant during scanning.

In one embodiment, the scanning is also done for the complete field of view, and not only the region of interest, for example with him to find the depth information of the whole scene, and thereafter process the information in said region of interest differently than outside of said region of interest.

Preferably, the method further comprises the step of imaging said region(s) of interest onto a plurality of rows and columns of sensing units of said first optical sensor, by means of optics, wherein the first light spot in the field of view corresponds to a detection on said first optical sensor. The imaging is preferably done onto a plurality of rows and columns of sensing units of an optical sensor. Each sensing unit comprises a photo detector. Imaging is done, for example, by means of the appropriate optics, imaging the reflected light from the field of view. For example, the light is reflected, after hitting objects in the field of view, imaged by said optics, and finally received by the optical sensor e.g. by the corresponding sensing unit to the point on the field of view. In other words, such optics ensure the reflected light reaches the corresponding sensing unit. The method preferably further comprises the step of determining the location of detection on said optical sensor.

The plurality of rows and columns of sensing units is advantageous in allowing different filtering methods, for example based on temporal and/or spatial conditions, for example based on neighboring sensing units or based on persisting detections in one sensing unit over multiple (e.g. at least two) time steps, or a combination thereof. This is also advantageous in improving error tolerance. For example, the filter exhibits either a spatial filtering method (i.e. at least two neighbouring pixels have a positive detection simultaneously), a temporal filtering method (i.e. pixels having a repeated positive detection status when receiving repeated pulses e.g. over multiple time windows), or a combination thereof.

Preferably, the method further comprises the step of obtaining depth information at said first light spot, preferably by triangulating detection points of said first optical sensor with instantaneous position of said first light beam, or with detection points of a different optical sensor. Depth information may also be obtained by other methods such as time of flight.

Preferably, the method comprises the step of projecting a second light beam onto a predetermined area of the cornea of the eye, thereby creating a second light spot on said field of view, by means of a second projector. For example, the projector is a light source, preferably a laser source which is able to generate a laser output. For example, the projection means is a light source with a substantially small numerical aperture such that the image of the source on the eye should be substantially small. The use of a laser source is advantageous due to the small numerical aperture, which allows accommodating different users having eyes at different eye relief in the face, for example people may have different nose sizes, which would move the system further or closer to the eyes. The prior art systems have a wide beam which covers the full eye. Although such a wide beam guarantee obtaining the reflections from the eye, it is power inefficient. In this invention, the projection means generates a narrow beam, which covers a small part of the eye, but which still results in the needed reflections, and therefore making the system power efficient. For example, the projection output on the eye is a dot-like output, for example comprising one dot or a plurality of dots on the eye. For example, the beam with the minimum spot size that is needed to produce the needed reflections, for example such that the reflections received on the optical sensor are distinguishable and are not overlapping. For example, the numerical aperture should be good enough for the tracking range such that the reflections do not overlap.

Preferably, the method comprises the step of detecting the reflected light from the eye by means of a second optical sensor, said reflected light comprises at least one, preferably two, specular reflection, said reflection is preferably at least a first Purkinje reflection, more preferably at least a first Purkinje reflection and a fourth Purkinje reflection. For example, the projector and the optical sensor are positioned such that the projection output is incident on the eye and reflected to and received by the optical sensor.

The output of the projector is preferably pulsed, for example having a pulse width of at least 1 nanosecond, preferably at least 10 nanoseconds. Preferably, pulse width should not be too long such that the reflection is oversaturated, but should not be too short such that the reflection is not distinguishable or detectable. For example, in case of relying on Purkinje reflection, the pulse width should be short enough such that the first Purkinje reflection is not oversaturated, but should be long enough such that the fourth Purkinje reflection detectable and distinguishable. For example, 40 nanoseconds. Another implementation is to define 2 pulse widths, each more suited to each of the expected Purkinje Image intensities. For examples, one may use 1 nanosecond pulses for the first Purkinje reflection, while increasing the pulse width to 40 nanoseconds to sense the 4th Purkinje reflection. In this case, the 1st Purkinje reflection may be sensed as a larger dot due to the increased optical energy, while being able to correctly sense the 4th Purkinje reflection. Furthermore, since the eye position needs tracking ideally in the 10 kHz domain, a significantly low duty-cycle can be achieved. With 1 nanosecond pulses and 100 samples for averaging of the sensed locations of the Purkinje reflections, a duty cycle of (100 nanosecond / 100 micros) = 0.1% can be achieved.

Preferably, the method comprises the step of determining the location of detection on said second optical sensor, preferably wherein the second optical sensor comprises a plurality of sensing units forming a matrix of pixels, preferably each sensing unit comprising a photo detector, preferably each photo detector is a single photon avalanche detector.

Preferably, the method comprises the step of, from the determined location of detection and/or the displacement thereof, calculating the orientation and/or position of said eye and/or the change thereof. This is done as described in PCT EP2024 064627.

Preferably, the method comprises the step of configuring one or both of the optical sensors in a plurality of rows and columns of said sensing units. This allows filtering based on neighborhood detections e.g. to exclude single isolated detections caused by noise. This also provides some error tolerance in case the photons were not detected by the predicted sensing units, but by sensing units which are neighboring thereto. For example, the number of rows and columns may be chosen as suitable to compensate for errors and to make sure of receiving the light by the optical sensor. For example, the light spot (generated by the light beam) has a spot size, wherein the number of rows is chosen such that the spot size is completely detected by said optical sensor.

Preferably, the method further comprises the step of adapting one or both of the first and second spot size to correspond to at least two by two pixels (i.e. the image of the spot size corresponds to said at least two by two pixels), preferably at least two by three pixels, preferably at least three by three pixels, on the first and/or second optical sensor. The image of the spot size is adapted to be sufficiently big to get sufficient spatial resolution of the position of the spot. This is advantageous for filtering detections, as described below. This is also advantageous in allowing to understand the movement of the spot on the scene across time. Generally, the method comprises the step of adapting the image of the spot size on the optical sensor to be corresponding to the number of pixels needed for the filter to operate. For example, if the filter operates based on neighborhood pixels, and requires 2 by 2 pixels (e.g. 2 pixels in the vertical direction and 2 pixels in the horizontal direction, so 4 connected pixels), then the image of the spot size on the optical sensor should also be 2 by 2 pixels. It is an advantage of embodiments of the present invention that a more reliable detection is obtained, due to the fact that the filtering of a detection of a pixel can be improved using detection of neighborhood pixels and/or detection over at least two time steps for the pixels and/or its neighboring pixels.

Preferably, the method comprises the step of filtering the detection determined by one sensing unit of said optical sensors, based on the presence of a detection over at least one neighboring sensing unit to said one sensing unit at one time step, or based on the presence of said detection over at least two consecutive time steps. This allows reliable detection. For example, a noise signal would neither, in most cases, appear over many neighboring pixels, nor appear on the same pixel over multiple consecutive time steps. Filtering is particularly advantageous for this invention as it makes it easier to distinguish the active light from the noise.

Preferably, the scanning is done in a first dimension (e.g. vertically) and in a second dimension (e.g. horizontally), and has the same or two different rates. For example, the scanning is done in both the horizontal and vertical dimensions, simultaneously, wherein the scanning in the vertical dimension is faster or slower than the horizontal dimension. For example, the scene is scanned with two different frequencies along two dimensions. For example, resulting in scanning trajectories such as Lissajous or others.

Preferably, the method comprises the step of triangulating detection points of the first optical sensor with instantaneous position of said light beam or with detection points of another optical sensor. This allows obtaining the depth of objects in the scene. Since the detection relies on the instantaneous position of the light beam e.g. of the instantaneous position of the emitted light of the projector, the need for stereo-matching is eliminated, for example between the light source and the first optical sensor, or between the first optical sensor and a different optical sensor. For example, the image in the first optical sensor can be matched to the image in the second optical sensor, for example using said light spot as a reference, without need for stereo-matching.

Preferably, the method comprises the step of constructing the scene progressively i.e. as the scene is scanned, based on 3D points obtained from e.g. said triangulation. The depth may also be obtained using other methods than triangulation, for example time of flight, or other methods known in the art for obtaining the depth value of objects in the scene. In other words, one 3D point is obtained at each time step, corresponding to one point being scanned on the scene, such that the scene and information thereof is progressively obtained. In other words, after many time steps, many 3D points are obtained in the scene, wherein one 3D point is obtained at each time step. This allows low latency operation and real-time knowledge of objects in the scene. Therefore, information about objects in the scene is obtained in low latency, or almost in real-time. For example, the scanning means is adapted to scan a light beam from said projector on said scene along a trajectory, wherein the system is adapted to obtain the depth along said trajectory sequentially, such that at each time step, said depth is obtained, for one location on the trajectory. This also allows the system to be more power efficient, because this eliminates the need to estimate the depth for the whole scene at every time step. This also means the system is able to already start processing the data at an earlier stage, and to get a good understanding of the scene without having to scan and process the complete scene, in comparison to processing the data after receiving the full information of the full scene. An image of the scene may thereafter be obtained on an image display, but not necessarily.

Preferably, the method comprises the step of distinguishing (e.g. by filtering) the active signal (e.g. the light spot on the scene) from the background noise, on the optical sensor. For example, by coincidence / persistence filtering conditions as explained in different parts of the document. This is made easier by the fact that the spot size is fixed or substantially the same, above a predetermined distance.

Preferably, the at least one physical saliency map is based on a depth map of objects in the field of view. Alternatively or additionally, one or both of the at least physical saliency map and depth map are obtained. Although most saliency maps in the art rely on cues such as color and texture, this is also possible using depth information of objects in the scene. For example, a depth map of the field of view is constructed, after which the eye is tracked a discussed above, and then the information of the depth map is corresponded or matched to the depth information. For example, if there is an object which has significantly different depth compared to the surrounding area, then it is likely that the user will look at that object first. Thereafter the information of that object may be processed differently, for example the user is able to zoom in or out of this region of interest. The depth information may be obtained using triangulation or time of flight or other methods in the art.

In a second aspect, the present invention relates to a system for visual awareness. The system comprises a first optical sensor (e.g. an eye tracker) adapted to track an eye of a user by determining at least one instantaneous angular position of the eye over a first period of time. The system is further adapted to determine a first region of interest in said field of view.

The system comprises at least a second optical sensor, wherein said second optical sensor is adapted to construct at least one physical saliency map of a field of view (or preferably construct the physical saliency map only of the region of interest).

The system further comprises a processor connected to said first and second optical sensors, wherein said processor is adapted to correlate said at least one angular position to said at least one physical saliency map. It is understood that said region of interest is smaller than the field of view, or in practice much smaller.

Preferably, the system (or processor) is adapted to process (and/or capture) information of said at least one region of interest differently than information outside of said at least one region of interest. For example, the field of view is first captured through the second optical sensor, and then processed, wherein the processing applied for said region of interest is different than the rest of the field of view.

Preferably, the second optical sensor is adapted to capture information of said at least one region of interest, as described in the first aspect. Preferably, the second optical sensor is adapted to predict the intentions of the user and taking further actions based thereon, as described in the first aspect. Preferably, the system is adapted to determine a pattern of behavior of said eye of said user, as described in the first aspect. Preferably, the system is adapted to determine said region of interest based on the instantaneous angular position of the eye in an initial period of time, as described in the first aspect. Preferably, the system is adapted to construct a 2D or 3D representation of said at least one region of interest based on said information, as described in the first aspect. Preferably, the system is adapted to utilize an artificial intelligence model to identify objects in said region of interest, as described in the first aspect. Preferably, said region of interest is smaller than one half of the field of view, as described in the first aspect. Preferably, the region of interest has an area, wherein the system is adapted to determine said area based on said saliency map, as described in the first aspect. Preferably, the region of interest is determined based on the period of time that the user spent looking the region of interest, as described in the first aspect. Preferably, the at least one region of interest is a plurality of regions of interest, as described in the first aspect. Preferably, the system is adapted to calculate the second period of time corresponding to each region of interest, and rank the regions of interest based on said second period of time, described in the first aspect.

Preferably, the system further comprising a first projector adapted to project a first light beam onto a predetermined area of the cornea of the eye, thereby creating a first light spot on said field of view. Preferably, the system further comprises a first optical sensor adapted to detect the reflected light from the eye. Preferably, the system is adapted such that said reflected light comprises at least one, preferably two, specular reflection, said reflection is preferably at least a first Purkinje reflection, more preferably at least a first Purkinje reflection and a fourth Purkinje reflection. Preferably, the processor is adapted to determine the location of detection on said first optical sensor, preferably wherein the first optical sensor comprises a plurality of sensing units forming a matrix of pixels, preferably each sensing unit comprising a photo detector, preferably each photo detector is a single photon avalanche detector. Preferably, the processor is further adapted to calculate the orientation and/or position of said eye and/or the change thereof, from the determined location of detection and/or the displacement thereof. This is done as described in PCT EP2024 064627.

Preferably, the system further comprises a second projector adapted to project a second light beam onto the region of interest, thereby creating a second light spot on said field of view. The projector is, for example, a light source. The light source is adapted to generate a light beam which generates a light spot on said scene (i.e. on the field of view of the optical sensor). Since the detection is based on the light beam, and since there is a significant difference between an illuminated point and a non-illuminated point due to the concentration of the illumination in a small area (e.g. the beam is a dot-like pattern), the system is immune to ambient light. At the same time, it is known where the beam is shining at each moment, therefore a detection in a spot or area in which the beam is not shining at that moment, is likely a false detection. Similarly, since the detection is based on said beam being e.g. dot-like, the power consumption is minimal.

Preferably, the system further comprises scanning means adapted to scan the light beam on said region of interest (or on said field of view, depending on where it is required to determine the depth value) along a trajectory. Said trajectory comprises a plurality of points on said scene, wherein at each time step, one point is scanned. It is preferable to scan as many points as possible, since this implies more information is obtained in relation to the scene and the depth of each point. However, the time-speed tradeoff is to be understood, for example having more points would result in slower scanning. Scanning is preferably continuous, such that objects in the field of view are continuously scanned and identified. For example, a light source generates a light beam, which produces a light spot on an object, wherein said beam is continuously scanned on said scene along said trajectory.

Preferably, the system further comprises optics adapted to image said region of interest (or field of view) onto said sensing units, i.e. the optics is able to make an image of said region of interest on sensing units of said second optical sensor, wherein the second light spot in the field of view corresponds to a detection on said second optical sensor. For example, based on the location of the light beam imaged on said second optical sensor, the depth information of the scene can be calculated by triangulation, as described in different parts of the document, or by different methods for measuring depth known in the art. For example, the reflected light from the scene (e.g. from an object in the scene) is received by at least one sensing unit, after which the optical pulse is translated into an electrical signal or logic pulse. Each pulse is timestamped with respect to a reference clock.

Preferably, said processor is adapted to obtain depth information at said second light spot. This can be done by triangulating detection points of said second optical sensor with instantaneous position of said second light beam, or with detection points of a different optical sensor (i.e. looking at the scene). This can also be done by other means of obtaining the depth information, for example time of flight, or other methods of techniques known in the art.

Preferably, the first optical sensor and/or the second optical sensors comprises a plurality of rows and columns of sensing units, and each sensing unit comprises a photo detector, preferably wherein each photodetector is a single photon detector. This is advantageous in allowing the detected signal to be filtered, for example using temporal and/or neighborhood information. In other words, the processor and/or the optical sensing system may be configured for filtering false-positive signals such as described in WO2021/240455, WO2022/136682, WO2023/281308, and WO2023047245.

For example, checking the detection of the neighboring sensing units, since the detections are likely to be detected over more than one pixel, as described in WO2022/136682. Alternatively or additionally, checking the persistence of the detections over time as described in WO2023047245. Therefore, the detections which are persistent over a long period of time are likely true detections, and the detections otherwise are likely false detections. Alternatively or additionally, each detector is connected with one column bus and one row bus, as described in WO2021/240455, to prevent reading the output pixel by pixel, which is advantageous in reducing the noise and also making the system faster. For example, the system is adapted to filter the location of detection, determined by said plurality of sensing units. For example, the reflected light is segregated from ambient light and noise. This may be based on the presence of said detection over one or two or more neighboring or semi-neighboring sensing units, for example by considering only pixels in the true status having at least one neighboring pixel also in the true status. This may additionally or alternatively be based on the presence of said detection over at least two consecutive time steps. For example, considering only pixels in the true status having at least one neighboring pixel also in the true status in the plurality of pixels obtained in one observation or a combination of the at least two consecutive or semi-consecutive observation windows.

Preferably, each of said photodetectors is a single photon detector, preferably a single photon avalanche detector (SPAD). Alternatively, said photo detector is an avalanche photo detector, also referred as avalanche photodiode (APD). Single photon detectors are advantageous since they are fast by nature, and allow to detect the position of the light beam (and the spot it leaves on the scene) in a fast and accurate manner. Single photon detectors have less energy consumption. In other prior art systems wherein single photon detectors are not used, the slow detection speed of sensing units is such a sequence of light beam spots on the field of view appears as a line instead of individual light spots, and therefore may require stereo matching. However, using single photon detectors to detect a light spot (e.g. a dot) that is being scanned, eliminates the need for stereo-matching.

Furthermore, using a single photon detector such as SPAD in the pixels (i.e. sensing units) is advantageous because it is sensitive to a single photon, which means that the active projected structure will need a minimum amount of energy since the detector is single photon sensitive. Another advantage is sub-nanosecond response time of detectors such as SPADs, meaning the photon is detected and encoded into a digital signal in nanoseconds or less. For example, the detector is adapted to output a signal to the processor. The signal is preferably an electrical detection signal upon detection of a photon. For example, a detection signal may be translated into a logic binary signal such as '1' for a detection, and '0' for no detection. Alternatively, a detection signal may be represented by or result in a pulse signal, e.g. a transition from logic '0' to logic '1', then a transition back from logic '1' to logic '0', while no detection may be represented by (or result in) an absence of such a pulse signal. Preferably, each photo detector is arranged in a reverse biased configuration.

Preferably, the system is adapted to construct the scene progressively as the scene is scanned, based on 3D points (depth information) obtained from e.g. said triangulation, as explained above.

Preferably, the processor of the system is configured for filtering the detection of a light spot by a sensing unit at any time during scanning, based on consecutive detections of a light spot by one sensing unit and/or by one or more vicinal sensing units. For example, the system is adapted to filter the detection determined by one sensing unit, based on the presence of a detection over at least one neighboring sensing unit to said one sensing unit at one time step, and/or based on the presence of said detection over at least two consecutive time steps.

Preferably, the processor is configured to receive detection data from the second optical sensor and to triangulate detection points obtained by said second optical sensor with the known projection position of said projector.

In one embodiment, the system further comprises at least a third optical sensor, for example constructed similarly to the second optical sensor. In that case, the processor is configured to receive detection data from said second optical sensor and from the third optical sensor and to triangulate detection points obtained by said second optical sensor with detection points of said third optical sensor. This allows to obtain the depth information at each point in the scene. The triangulation may also be done between the detection points of one optical sensor, and the instantaneous projection vector direction of the projector.

In the first case, it is known where the light source is shining at each moment. Therefore, triangulation may be based on the detection points of said second optical sensor, and the location from where the light source is originating, similarly to the case in which a different optical sensor is used to achieve said triangulation. For example, considering the light source as a camera or an optical sensor, for which the image plane would then contain the dots forming the scanning pattern, instead of seeing or detecting the light spot with the sensing units. For example, the instantaneous position and orientation of the light beam projected by said second projector is triangulated with the detection of one optical sensor. In the second case, the detection points of the second and the third optical sensors are triangulated. For example, wherein the system is adapted to triangulate detection points of said second optical sensor with instantaneous position of said second light beams, or with detection points of said third optical sensor. Scanning a light beam from said projector or light source is advantageous in allowing triangulation. For example, using a system comprising a light source emitting a light beam on a scene (e.g. an environment) and two optical sensors, wherein said two optical sensors have a shared field of view of the scene, it is possible to convert x-y-time data of the two sensors to x-y-z-time data by triangulation, for each time instant. For example, by adapting said light source to illuminate a light beam on said scene in an illumination trace, wherein said light source comprises means adapted to scan said light beam on said scene (preferably continuously), wherein said optical sensors monitor the light spot produced by said light beam and output locations of points of at least one object (e.g. points of surfaces of said object) in said scene along said trace at a plurality of instances, wherein the x-y-time data of the two optical sensors can be converted to x-y-z-time data using triangulation. The light source may act for example as a reference point, such that said locations of said points of said object of the second optical sensor can be triangulated with those of the second optical sensor, to create the depth or z-dimension.

Preferably, finding depth information may be preceded by a filtering step, for example to reduce the number of sensing units with false detections. Filtering may be based on expected pulse width, expected dot projection size, past detection(s) and current detection(s) of the pixel and its neighboring pixel(s). For example, checking the detection of the neighboring sensing units (e.g. pixels), or checking the persistence of the detections over time. For example, detection by one particular sensing unit at one particular time and/or detection by sensing units vicinal to the particular sensing unit during an interval of time before and/or after and/or during the particular time, or checking the persistence of the detections over time. This is an in-pixel filtering mechanism. Other filtering mechanisms may be also available, for example after projecting the detections on a periphery of the optical sensor, it is possible to remove some noisy detections, since the projection pattern is known.

Preferably, the light source (i.e. projector) is configured for providing a light beam having a wavelength detectable by the sensing units of the optical sensor. The wavelength of the light beam can be comprised between 100 nanometer and 10 micrometer, preferably between 100 nanometer and 1 micrometer. For example, each optical sensor comprises photo detectors able to detect photons impinging on each detector within a wavelength detection window falling within the range of 100 nanometer and 10 micrometer, preferably between 100 nanometer and 1 micrometer. It is also possible to use multiple wavelengths to reduce sensitivity to surface and color, and then have a filter on chip.

Preferably, the system comprises image representation means, for example a screen-like or other image representation devices, so as to reproduce locations of points of said objects in said scene. The processor is configured for providing output data of a three dimensional image of a scene to an image display. In one embodiment, the processor is configured to reconstruct a three dimensional image of the scene to an image display. However, said processor may allow analyzing the scene, for example by extracting features of objects in the scene, without necessarily producing an image of said scene.

Preferably, the optical system is used for 3D vision applications, for example AR/VR (augmented reality/virtual reality) applications. For example, the system may be used to visualize objects in three dimensions. Alternatively, said sensor may allow analyzing the scene, for example by extracting features of objects in the scene, without necessarily producing an image of said scene. In some embodiments, the system comprises a plurality of optical sensors and/or a plurality of light sources. This is advantageous in creating 3D vision. For example, by triangulating the outputs (i.e. the x-y data) of two such optical sensors to obtain 3D information (x-y-z data).

Preferably, a region of said field of view is considered as the region of interest if the period of time in which the angular position corresponded to a region is a second period of time, above a third predetermined period of time, within a fourth predetermined period of time, then this region becomes the region of interest, as explained in the first aspect.

Any feature of the second aspect (system) may be as correspondingly described in the first aspect (method). For example, the system of the second aspect is operating based on the method of the first aspect.

In a third aspect, the present invention relates to a wearable device e.g. headset or glasses, comprising the system of the second aspect. In one embodiment, the headset can be a wearable device that can be mounted on the head of a user, such as an AR/VR/XR glasses. In one embodiment, the optical sensing system may comprise an optical sensor which is mounted on one side of the glasses (or headset, or wearable), and a laser source which is mounted on another side of the glasses.

Further characteristics and advantages of embodiments of the present invention will be described with reference to the figures. It should be noted that the invention is not restricted to the specific embodiments shown in these figures or described in the examples.

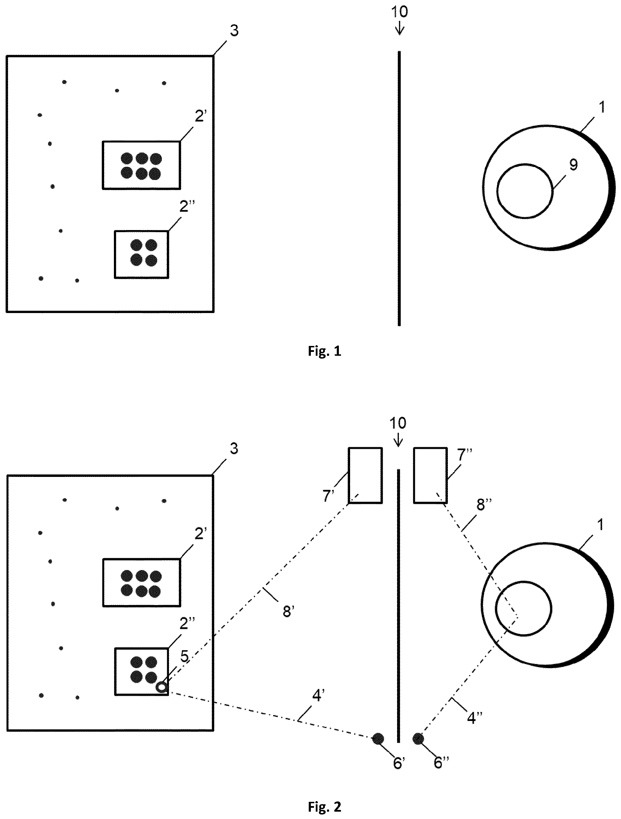

Fig. 1 shows an eye (1) of a user, a system (10), and a scene (3). The scene (3) has two regions of interest (2', 2"). A The system (10) is shown in more details in Fig. 2, comprising a second optical sensor (7') and a first optical sensor (2). The second sensor (7') monitors the scene (3), and the first optical sensor (7") monitors the eye (1) of the user, more specifically a cornea (9) of the eye (1), even more specifically the orientation of the eye of the user. Thereafter, the orientation of the eye is matched to the at least one physical saliency map and/or depth map.

The physical saliency map and/or depth map may be created with the assistance of a second projector (6') and a first projector (6"). The light beam (4') creates a light spot (5) on the scene (3), after which the light is reflected (8') back at the optical sensor (7'). From there, triangulation or time of flight may be used to calculate the depth. Alternatively, other kind of sensors may be used to create physical saliency map, for example, RGB cameras, to create a physical saliency based on colors, or different kind of cameras, to create physical saliency based on shapes.

After corresponding the orientation of the eye to the physical saliency map and/or depth map of the scene, it is possible to define a region(s) of interest of the user, and process the data thereof differently than other parts of the scene. For example, two regions of interest are identified here (2', 2"), because they corresponded to information in the physical saliency maps and/or depth map. while other parts of the scene were deemed less interesting for the user.

It is noteworthy that the scene is illustrated here as flat surface for simplicity, however the scene in real life is a 3D scene.

Other arrangements for accomplishing the objectives of the methods and devices embodying the invention will be obvious for those skilled in the art. The proceeding description gives details of certain embodiments of the present invention. It will, however, be clear that no matter how detailed the above turns out to be in text, the invention may be applied in many ways. It should be noted that the use of certain terminology when describing certain characteristics or aspects of the invention should not be interpreted as implying that the terminology herein is defined again to be restricted to specific characteristics or aspects of the invention to which this terminology is coupled.

### LIST OF REFERENCE SIGNS

- **1**: Eye
- **2', 2"**: Regions of interest
- **3**: Scene or field of view
- **4', 4"**: First and second light beam
- **5**: Light spot
- **6', 6"**: First and second projector
- **7', 7"**: First and second optical sensor
- **8', 8"**: Reflected light
- **9**: Cornea
- **10**: System

## Claims

1. A method for visual awareness, the method comprising the steps of:
- tracking an eye (1) of a user for at least a first period of time, by determining at least one instantaneous angular position of the eye (1) over said first period of time,
- determining, based on said tracking, a first region of interest (2', 2") in said field of view (3),
- constructing at least one physical saliency map at least in said first region of interest (2', 2"), and
- correlating said at least one angular position to said at least one physical saliency map.

2. A method according to claim 1, wherein the method comprises the step of determining, based on the correlation, a second region of interest, wherein said second region of interest is smaller than said first region of interest.

3. A method according to claims 1 or 2, wherein the method comprises the step of processing information of said first and/or second region of interest (2', 2") differently than information outside of said first and/or second region of interest (2', 2").

4. A method according to any of the previous claims, wherein the method comprises the step of capturing information of at least said first and/or second region of interest (2', 2"), wherein said information comprises colors, and/or contrast, and/or shapes.

5. A method according to any of the previous claims, wherein the method comprises the step of obtaining a depth map only in said first and/or second region of interest.

6. A method according to claim 5, wherein said physical saliency map is constructed based on said depth map.

7. A method according to any of the previous claims, wherein the method further comprises the step of determining a pattern of behavior of said eye of said user, and predicting based on said pattern of behavior of said eye an intended task of the user, and predicting, based on said intended task, the region of interest in current and future periods of time.

8. A method according to any of the previous claims, wherein the method further comprises the step of determining said region of interest based on the instantaneous angular position of the eye in an initial period of time, wherein said initial period of time is the first 20% of the first period of time, preferably 10%, more preferably 5%.

9. A method according to any of the previous claims, further comprising the step of an artificial intelligence model to identify objects in said region of interest (2', 2").

10. A method according to any of the previous claims, wherein the region of interest (2', 2") has an area, wherein the method further comprises the step of determining said area based on said physical saliency map.

11. A method according to any of the previous claims, wherein a region of said field of view (3) is considered as the region of interest (2', 2") based on an eye-frequentation map.

12. A method according to any of the previous claims, wherein the first region of interest (2', 2") is a plurality of regions of interest (2', 2"), wherein each of said plurality of regions of interest corresponds to at least one physical saliency map, and preferably wherein the method further comprises the step of ranking the plurality of regions of interest based on said eye-frequentation map.

13. A method according to any of the previous claims, further comprising the steps of:
- projecting a first light beam (4') onto the region of interest (2', 2"), thereby creating a first light spot (5') on said field of view (3), by means of a first projector (6');
- scanning said first light beam (4') along a trajectory, such as to scan at least partially said region of interest, by means of a scanner;
- detecting the reflected light (8') from the region of interest (2', 2") by means of a first optical sensor (7'),
- imaging said region of interest (2', 2") onto a plurality of rows and columns of sensing units of said first optical sensor (7'), by means of optics, wherein the first light spot (5') in the field of view (3) corresponds to a detection on said first optical sensor (7'), and
- obtaining depth information at the location of said first light spot (5').

14. A method according to any of the previous claims, further comprising the steps of:
- projecting a second light beam (4") onto a predetermined area of the cornea of the eye (1), thereby creating a second light spot (5") on said field of view (3), by means of a second projector (6');
- detecting the reflected light (8") from the eye (1) by means of a second optical sensor (7"), said reflected light (8") comprises at least one, preferably two, specular reflection, said reflection is preferably at least a first Purkinje reflection, more preferably at least a first Purkinje reflection and a fourth Purkinje reflection;
- determining the location of detection on said second optical sensor (7"), preferably wherein the second optical sensor (7") comprises a plurality of sensing units forming a matrix of pixels, preferably each sensing unit comprising a photo detector, preferably each photo detector is a single photon avalanche detector; and
- from the determined location of detection and/or the displacement thereof, calculating the orientation and/or position of said eye (1) and/or the change thereof.

15. A system (10) for visual awareness, comprising:
- a first optical sensor (7"), adapted to track an eye (1) of a user by determining at least one instantaneous angular position of the eye (1) over at least a first period of time, and further adapted to determine a first region of interest (2', 2") in said field of view (3),
- a second optical sensor (7') adapted to construct at least one physical saliency map at least in said region of interest (2', 2"),
- a processor connected to said optical sensors (7', 7"), wherein said processor is adapted to correlate said at least one angular position to said at least one physical saliency map.
